# EUROPÄISCHE PATENTANMELDUNG

(11) **EP 4 844 434 A1**
(43) Veröffentlichungstag der Anmeldung: **25.11.2026**
(21) Anmeldenummer: 26179369.9
(22) Anmeldetag: 18.05.2026
(51) Int. Cl.: G01S 5/18, G08G 1/0965

(54) **VERFAHREN UND EIN SYSTEM ZUR ERKENNUNG EINER POSITION UND FAHRTRICHTUNG VON EINSATZFAHRZEUGEN**

(30) Priorität: 19.05.2025 DE 102025119256
(71) Anmelder: Daimler Truck AG, 70771 Leinfelden-Echterdingen (DE)
(72) Erfinder: Oberfell, Ralf, 70771 Leinfelden-Echterdingen (DE); Kok, Wilhelmus, 70771 Leinfelden-Echterdingen (DE)

(57) **Zusammenfassung**

Die Erfindung betrifft ein Verfahren zur Erkennung einer Position und Fahrtrichtung von Einsatzfahrzeugen (1) über von diesen ausgesandte akustische Warnsignale (AW), wobei die akustischen Warnsignale (AW) des Einsatzfahrzeugs (1) von mehreren Ego-Fahrzeugen (3) mittels eines jeweiligen einzigen elektro-akustischen Erfassungsmittels (4) im Innenraum des jeweiligen Ego-Fahrzeugs (3) erfasst und in elektrische Signale umgewandelt werden, wobei aus den elektrischen Signalen mittels einer Frequenzverarbeitung in einem Steuergerät (9) des jeweiligen Ego-Fahrzeugs (3) eine Dopplerverschiebung berechnet und daraus eine Relativbewegung zwischen dem Einsatzfahrzeug (1) und dem Ego-Fahrzeug (3) bestimmt wird, dass ferner die Änderung einer Lautstärke der akustischen Warnsignale (AW) analysiert und daraus eine relative Entfernung zwischen dem Einsatzfahrzeug (1) und dem Ego-Fahrzeug (3) abgeschätzt wird, wonach die ermittelten Entfernungs- und Bewegungswerte und der mittels eines satellitengestützten Positionserfassungssystems (5) des Ego-Fahrzeugs (3) ermittelte momentane Standort des Ego-Fahrzeugs (3) über eine drahtlose Kommunikationsschnittstelle (6) an eine Cloud (7) übermittelt werden, wobei in der Cloud (7) aus den erhaltenen Werten mehrerer Ego-Fahrzeuge (3) eine Triangulation durchgeführt wird, mittels derer die Richtung und Geschwindigkeit des Einsatzfahrzeugs (1) zu den einzelnen Ego-Fahrzeugen (3) ermittelt und diesen durch Übermittlung an deren drahtlose Kommunikationsschnittstellen (6) zur Verfügung gestellt werden.

## Beschreibung

Die Erfindung betrifft ein Verfahren zur Erkennung einer Position und Fahrtrichtung von Einsatzfahrzeugen gemäß dem Oberbegriff des Anspruchs 1 sowie ein System zur Erkennung einer Position und Fahrtrichtung von Einsatzfahrzeugen gemäß dem Oberbegriff des Anspruchs 5.

Die Lokalisierung von Einsatzfahrzeugen, insbesondere von deren Position und Fahrtrichtung, ist technisch auf Basis akustischer Erfassung der Tonfolgesignale nur mit großem Aufwand umsetzbar. Für den Fahrer eines Fahrzeugs ist es wichtig zu wissen, wenn sich ein Einsatzfahrzeug von hinten annähert und Platz geschaffen werden muss.

DE 10 2021 100 584 A1 beschreibt ein Verfahren zur Erfassung und Klassifizierung von Sirenensignalen und zur Lokalisierung von Sirenensignalquellen, umfassend Folgendes: Erfassen von Schallsignalen in einer Umgebung durch eine oder mehrere Mikrofonanordnungen eines Fahrzeugs; Extrahieren von Frequenzspektrenmerkmalen aus den Schallsignalen; Vorhersagen einer oder mehrerer Sirenensignalklassifizierungen unter Verwendung eines akustischen Szenenklassifizierers und der Frequenzspektrenmerkmale; Umwandeln der einen oder der mehreren Sirenensignalklassifizierungen in eine oder mehrere Sirenensignalereigniserfassungen; Berechnen von Schätzungen der Ankunftszeitverzögerung für das eine oder die mehreren erfassten Sirenensignale; Schätzen eines oder mehrerer Peilwinkel zu einer oder mehreren Quellen des einen oder der mehreren erfassten Sirenensignale unter Verwendung der Schätzungen der Ankunftszeitverzögerung und einer bekannten Geometrie der Mikrofonanordnung; und Verfolgen des einen oder der mehreren Peilwinkel unter Verwendung eines Bayesschen Filters. Wenn eine Sirene erfasst wird, werden vom Fahrzeug Aktionen ausgeführt, je nachdem, wo sich das Einsatzfahrzeug befindet und ob das Einsatzfahrzeug aktiv oder inaktiv ist.

DE 10 2021 129 528 A1 beschreibt ein Verfahren zur Erkennung von Einsatzfahrzeugen für Anwendungen im Bereich des autonomen Fahrens. Dabei können Audiowarnungen von Einsatzfahrzeugen anhand der von den Mikrofonen einer autonomen oder halbautonomen Maschine aufgenommenen Audiosignale erkannt und klassifiziert werden, um Fahrtrichtungen, Positionen und/oder Typen von Einsatzfahrzeugen in der Umgebung zu identifizieren. So kann beispielsweise eine Vielzahl von Mikrofonarrays auf einem autonomen oder halbautonomen Gerät angebracht werden, um Audiosignale zu erzeugen, die den Geräuschen in der Umgebung entsprechen. Diese Audiosignale können verarbeitet werden, um die Position und/oder Fahrtrichtung eines Einsatzfahrzeugs zu bestimmen (z. B. unter Verwendung von Triangulation). Zur Identifizierung von Sirenentypen - und damit auch der entsprechenden Einsatzfahrzeuge - können die Audiosignale außerdem verwendet werden, um Darstellungen eines Frequenzspektrums zu erzeugen, die mit einem tiefen neuronalen Netzwerk (DNN) verarbeitet werden können, das Wahrscheinlichkeiten für die durch die Audiodaten dargestellten Alarmtypen ausgibt. Anhand der Positionen, der Fahrtrichtung und/oder des Sirenentyps kann ein Ego-Fahrzeug oder ein Ego-Gerät ein Einsatzfahrzeug identifizieren und daraufhin Planungs- und/ oder Steuerungsentscheidungen treffen.

Der Erfindung liegt die Aufgabe zu Grunde, ein neuartiges Verfahren und ein neuartiges System zur Erkennung einer Position und Fahrtrichtung von Einsatzfahrzeugen anzugeben.

Die Aufgabe wird erfindungsgemäß gelöst durch ein Verfahren zur Erkennung einer Position und Fahrtrichtung von Einsatzfahrzeugen mit den Merkmalen des Anspruchs 1 und durch ein System zur Erkennung einer Position und Fahrtrichtung von Einsatzfahrzeugen mit den Merkmalen des Anspruchs 5.

Vorteilhafte Ausgestaltungen der Erfindung sind Gegenstand der Unteransprüche.

Es wird ein Verfahren und ein System zur Erkennung einer Position und Fahrtrichtung von Einsatzfahrzeugen über von diesen ausgesandte akustische Warnsignale vorgeschlagen. Um die Sicherheit von Ego-Fahrzeug-Verkehrsteilnehmern im Verkehr mit einem im Einsatz befindlichen Einsatzfahrzeug zu verbessern, wird erfindungsgemäß vorgeschlagen, dass die akustischen Warnsignale des Einsatzfahrzeugs von mehreren Ego-Fahrzeugen mittels eines jeweiligen einzigen elektro-akustischen Erfassungsmittels im Innenraum des jeweiligen Ego-Fahrzeugs erfasst und in elektrische Signale umgewandelt werden, wobei aus den elektrischen Signalen mittels einer Frequenzverarbeitung in einem Steuergerät des jeweiligen Ego-Fahrzeugs eine Dopplerverschiebung berechnet und daraus eine Relativbewegung zwischen dem Einsatzfahrzeug und dem Ego-Fahrzeug bestimmt wird, dass ferner die Änderung einer Lautstärke der akustischen Warnsignale analysiert und daraus eine relative Entfernung zwischen dem Einsatzfahrzeug und dem Ego-Fahrzeug abgeschätzt wird, wonach die ermittelten Entfernungs- und Bewegungswerte und der mittels eines satellitengestützten Positionserfassungssystems des Ego-Fahrzeugs ermittelte momentane Standort des Ego-Fahrzeugs über eine drahtlose Kommunikationsschnittstelle an eine Cloud übermittelt werden, wobei in der Cloud aus den erhaltenen Werten mehrerer Ego-Fahrzeuge eine Triangulation durchgeführt wird, mittels derer die Richtung und Geschwindigkeit des Einsatzfahrzeugs zu den einzelnen Ego-Fahrzeugen ermittelt und diesen durch Übermittlung an deren drahtlose Kommunikationsschnittstellen zur Verfügung gestellt werden.

Wenn mehrere Ego-Fahrzeuge mit einem Modul zur Direktkommunikation (V2V) ausgestattet sind und die Möglichkeit haben, einander zu erreichen, können mehrere Werte anderer Ego-Fahrzeuge in einem Fahrzeug direkt empfangen werden. Auf gleiche Art und Weise wie in der Cloud, kann eine Richtung und Position des Einsatzfahrzeuges durchgeführt werden. Diese Information kann dem Fahrer (zum Beispiel optisch und/oder akustisch) zur Verfügung gestellt werden. Wie bei der Cloudlösung kann die Information, wie berechnet im Egofahrzeug, in die Cloud geschickt werden und zum Beispiel anderen Verkehrsteilnehmern zur Verfügung gestellt werden.

Die vorliegende Erfindung ermöglicht die Erhöhung der Verkehrssicherheit, schnellere Eingreifzeiten von Feuerwehr, Rettungsdiensten und Polizei und eine Kostenreduktion bei der Mikrofontechnik in den Ego-Fahrzeugen.

Ausführungsbeispiele der Erfindung werden im Folgenden anhand von Zeichnungen näher erläutert.

Dabei zeigen:
- Fig. 1:: eine schematische Ansicht eines Einsatzfahrzeugs mit einer Vorrichtung zur Erzeugung akustischer Warnsignale,
- Fig. 2:: eine schematische Ansicht eines Ego-Fahrzeugs, und
- Fig. 3:: eine schematische Ansicht mehrerer Ego-Fahrzeuge und einer Cloud.

Einander entsprechende Teile sind in allen Figuren mit den gleichen Bezugszeichen versehen.

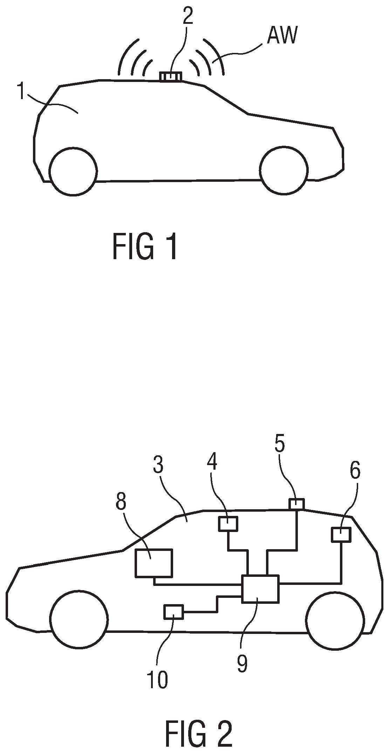

Figur 1 ist eine schematische Ansicht eines Einsatzfahrzeugs 1 mit einer Vorrichtung 2 zur Erzeugung akustischer Warnsignale AW.

Figur 2 ist eine schematische Ansicht eines Ego-Fahrzeugs 3.

Um die Sicherheit des Ego-Fahrzeugs 3 im Verkehr mit einem im Einsatz befindlichen Einsatzfahrzeug 1 zu verbessern, wird erfindungsgemäß vorgeschlagen, dass die akustischen Warnsignale AW des Einsatzfahrzeugs 1 mittels eines einzigen elektro-akustischen Erfassungsmittels 4, beispielsweise eines Mikrofons 4, im Innenraum des Ego-Fahrzeugs 3 erfasst und in elektrische Signale umgewandelt werden, dass aus den elektrischen Signalen mittels einer Frequenzverarbeitung in einem Steuergerät 9 des jeweiligen Ego-Fahrzeugs 3 eine Dopplerverschiebung berechnet und daraus eine Relativbewegung zwischen dem Einsatzfahrzeug 1 und dem Ego-Fahrzeug 3 bestimmt wird, dass ferner die Änderung einer Lautstärke der akustischen Warnsignale AW analysiert und daraus eine relative Entfernung zwischen dem Einsatzfahrzeug 1 und dem Ego-Fahrzeug 3 abgeschätzt wird, wonach die ermittelten Entfernungs- und Bewegungswerte und der mittels eines satellitengestützten Positionserfassungssystems 5, beispielsweise GPS, ermittelte momentane Standort des Ego-Fahrzeugs 3 über eine drahtlose Kommunikationsschnittstelle 6 an eine Cloud 7 übermittelt werden.

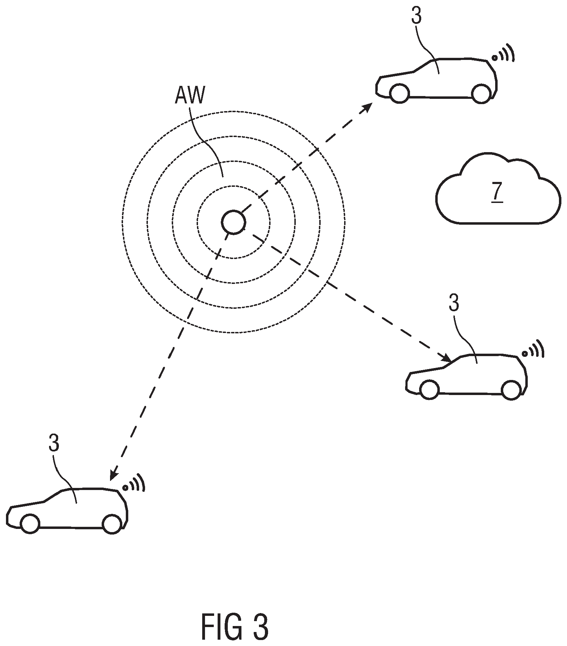

Figur 3 ist eine schematische Ansicht mehrerer Ego-Fahrzeuge 3 und der Cloud 7.

In der Cloud 7 wird aus den erhaltenen Werten mehrerer Ego-Fahrzeuge 3 eine Triangulation durchgeführt, mittels derer die Richtung und Geschwindigkeit des Einsatzfahrzeugs 1 zu den einzelnen Ego-Fahrzeugen 3 ermittelt und diesen durch Übermittlung an deren drahtlose Kommunikationsschnittstellen 6 zur Verfügung gestellt werden.

Wenn mehrere Ego-Fahrzeuge 3 mit einem Modul zur Direktkommunikation (V2V) ausgestattet sind und die Möglichkeit haben, einander zu erreichen, können mehrere Werte anderer Ego-Fahrzeuge 3 in einem Fahrzeug direkt empfangen werden. Auf gleiche Art und Weise wie in der Cloud 7, kann eine Richtung und Position des Einsatzfahrzeuges 1 durchgeführt werden. Diese Information kann dem Fahrer (zum Beispiel optisch und/oder akustisch) zur Verfügung gestellt werden. Wie bei der Cloudlösung kann die Information, wie berechnet im Ego-Fahrzeug 3, in die Cloud 7 geschickt werden und zum Beispiel anderen Verkehrsteilnehmern zur Verfügung gestellt werden.

In einer Ausführungsform wird die Bewegung des Einsatzfahrzeugs 1 und dessen Geschwindigkeit auf einem Fahrzeugbildschirm 8 im Ego-Fahrzeug 3 visualisiert.

In einer Ausführungsform werden von der Frequenzverarbeitung nicht zu den Warnsignalen AW des Einsatzfahrzeugs 1 zugehörige Frequenzen ausgefiltert.

In einer Ausführungsform wird eine Signalfolge der Warnsignale AW und deren Frequenzhöhe ermittelt und als Signatur einer bestimmten Art von Einsatzfahrzeugen 1 zugeordnet.

Das Warnsignal AW des Einsatzfahrzeugs 1 kann standardisiert sein und sendet damit eine bekannte akustische Signatur. Ein Ego-Fahrzeug 3 ist (beispielsweise durch ein Innenraum-Mikrofon) in der Lage, dieses akustische Warnsignal AW zu erfassen. Nachgelagert zur akustischen Erfassung kann eine vom Ego-Fahrzeug 3 selbst über mindestens einen Lautsprecher 10 gesendete und damit bekannte Audiospur (beispielsweise Radio, MP3, Telefonanrufe, usw.) abgezogen oder gefiltert werden. Dadurch steht ausschließlich das Außengeräusch zur weiteren Bearbeitung zur Verfügung.

Basierend auf der Tonspur der Außengeräusche wird nun beispielsweise eine Frequenzanalyse (beispielsweise FFT) durchgeführt. Damit ist ein bekanntes Warnsignal AW mit bestimmten Frequenzen (auch im zeitlichen Verlauf) bestimmbar. Zusätzlich kann über die Erkennung einer Doppler-Frequenzverschiebung eine Relativbewegung zwischen dem sendenden Einsatzfahrzeug 1 und dem empfangenden Ego-Fahrzeug 3 berechnet werden. Über die gemessene Lautstärke kann auch eine Schätzung der Entfernung durchgeführt werden. Allerdings ist es nicht möglich, mit nur einem Mikrofon eine vollständige Triangulation durchzuführen, da die Gleichungen nicht aufgelöst werden können (zu viele Freiheitsgrade). Ob sich beispielsweise ein Einsatzfahrzeug 1 von hinten links oder hinten rechts annähert, kann vom empfangenden Ego-Fahrzeug 3 alleine nicht unterschieden werden.

Für die exakte Bestimmung des Einsatzfahrzeugs 1 werden daher die akustischen Wahrnehmungen mehrerer Ego-Fahrzeuge 3 über eine cloudbasierte Anwendung zusammengeschaltet. Dazu werden von mehreren oder allen empfangenden und an dieser Situation beteiligten Ego-Fahrzeugen 3 beispielsweise die folgenden Daten zur Weiterverarbeitung in die Cloud 7 gesendet:
- akustische Signalstärke,
- Frequenzanalyse und/oder Frequenzverschiebung,
- Fahrzeugposition (Ego-Fahrzeug 3),
- Fahrtrichtung (Ego-Fahrzeug 3),
- Fahrzeuggeschwindigkeit,
- Zeitstempel.

Dies wird wiederholend von den beteiligten Ego-Fahrzeugen 3 durchgeführt. Mit den von mehreren Ego-Fahrzeugen 3 empfangenen Daten kann nun in der cloudbasierten Anwendung eine Triangulation durchgeführt werden. Damit können folgenden Attribute des detektierten Einsatzfahrzeuges 1 geschätzt oder bestimmt werden:
- Fahrzeugposition Einsatzfahrzeug 1,
- Geschwindigkeit Einsatzfahrzeug 1,
- Richtung Einsatzfahrzeug 1.

Diese Informationen werden als Zeitreihe an die Ego-Fahrzeuge 3 in der Nähe des Einsatzfahrzeugs 1 gesendet. Über die Cloud 7 kann diese Information auch noch anderen Instanzen zur Verfügung gestellt werden.

### Bezugszeichenliste

- 1: Einsatzfahrzeug
- 2: Vorrichtung
- 3: Ego-Fahrzeug
- 4: elektro-akustisches Erfassungsmittel, Mikrofon
- 5: Positionserfassungssystem
- 6: Kommunikationsschnittstelle
- 7: Cloud
- 8: Fahrzeugbildschirm
- 9: Steuergerät
- 10: Lautsprecher

- AW: Warnsignal

## Patentansprüche

1. Verfahren zur Erkennung einer Position und Fahrtrichtung von Einsatzfahrzeugen (1) über von diesen ausgesandte akustische Warnsignale (AW),
**dadurch gekennzeichnet, dass** die akustischen Warnsignale (AW) des Einsatzfahrzeugs (1) von mehreren Ego-Fahrzeugen (3) mittels eines jeweiligen einzigen elektro-akustischen Erfassungsmittels (4) im Innenraum des jeweiligen Ego-Fahrzeugs (3) erfasst und in elektrische Signale umgewandelt werden, wobei aus den elektrischen Signalen mittels einer Frequenzverarbeitung in einem Steuergerät (9) des jeweiligen Ego-Fahrzeugs (3) eine Dopplerverschiebung berechnet und daraus eine Relativbewegung zwischen dem Einsatzfahrzeug (1) und dem Ego-Fahrzeug (3) bestimmt wird, dass ferner die Änderung einer Lautstärke der akustischen Warnsignale (AW) analysiert und daraus eine relative Entfernung zwischen dem Einsatzfahrzeug (1) und dem Ego-Fahrzeug (3) abgeschätzt wird, wonach die ermittelten Entfernungs- und Bewegungswerte und der mittels eines satellitengestützten Positionserfassungssystems (5) des Ego-Fahrzeugs (3) ermittelte momentane Standort des Ego-Fahrzeugs (3) über eine drahtlose Kommunikationsschnittstelle (6) an eine Cloud (7) übermittelt werden, wobei in der Cloud (7) aus den erhaltenen Werten mehrerer Ego-Fahrzeuge (3) eine Triangulation durchgeführt wird, mittels derer die Richtung und Geschwindigkeit des Einsatzfahrzeugs (1) zu den einzelnen Ego-Fahrzeugen (3) ermittelt und diesen durch Übermittlung an deren drahtlose Kommunikationsschnittstellen (6) zur Verfügung gestellt werden.

2. Verfahren nach Anspruch 1,
**dadurch gekennzeichnet, dass** die Bewegung des Einsatzfahrzeugs (1) und dessen Geschwindigkeit auf einem Fahrzeugbildschirm (8) im Ego-Fahrzeug (3) visualisiert werden.

3. Verfahren nach Anspruch 1 oder 2,
**dadurch gekennzeichnet, dass** von der Frequenzverarbeitung nicht zu den Warnsignalen (AW) des Einsatzfahrzeugs (1) zugehörige Signale oder Frequenzen ausgefiltert werden.

4. Verfahren nach einem der vorhergehenden Ansprüche,
**dadurch gekennzeichnet, dass** eine Signalfolge der Warnsignale (AW) und deren Frequenzhöhe ermittelt und als Signatur einer bestimmten Art von Einsatzfahrzeugen (1) zugeordnet werden.

5. System zur Erkennung einer Position und Fahrtrichtung von Einsatzfahrzeugen (1) über von diesen ausgesandte akustische Warnsignale (AW),
**gekennzeichnet durch**
- mehrere Ego-Fahrzeuge (3) mit einem jeweiligen elektro-akustischen Erfassungsmittel (4) im Innenraum des jeweiligen Ego-Fahrzeugs (3), einem Steuergerät (9), einem satellitengestütztes Positionserfassungssystem (5), einer drahtlosen Kommunikationsschnittstelle (6), und
- eine Cloud (7),
wobei das System zur Durchführung des Verfahrens nach einem der vorhergehenden Ansprüche konfiguriert ist.
